Europäisches Patentamt

European Patent Office

Office européen des brevets

(11) Veröffentlichungsnummer: **0 410 094 A1**

# (12) EUROPÄISCHE PATENTANMELDUNG

(21) Anmeldenummer: 90109323.7

(22) Anmeldetag: 17.05.90

(51) Int. Cl.⁵: **B21C 1/32**

(30) Priorität: 26.07.89 DE 3924641

(43) Veröffentlichungstag der Anmeldung:
**30.01.91 Patentblatt 91/05**

(84) Benannte Vertragsstaaten:
**ES FR GB IT**

(71) Anmelder: **AEG-Elotherm GmbH**
**Hammesberger Strasse 31**
**D-5630 Remscheid-Hasten(DE)**

(72) Erfinder: **Kliesow, Wolfgang, Dipl.-Ing.**
**Johann-Peter-Frohn-Strasse 1**
**D-5630 Remscheid(DE)**
Erfinder: **Klärner, Renate, Dipl.-Ing.**
**Zum Tal 76**
**D-5600 Wuppertal(DE)**
Erfinder: **Fuchs, Herbert**
**Steinberger Strasse 40**
**D-5630 Remscheid(DE)**

(74) Vertreter: **Cohausz & Florack**
**Patentanwältelte**
**Postfach 14 01 61 Schumannstrasse 97**
**D-4000 Düsseldorf 1(DE)**

(54) **Zange zur Entnahme von Blöcken aus einer Induktions-Erwärmungsanlage.**

(57) Die Erfindung betrifft eine Zange (5a,5b) zur Entnahme von Blöcken (1) aus einer Induktionserwärmungsanlage (2) mit zwei im rechten Winkel zur Förderrichtung beim Öffnen und Schließen der Zange jeweils in entgegengesetzte Richtungen zwangsgeführten Zangenhälften. Kennzeichen der Erfindung ist, daß an den Zangenhälften Backen (6a,6b) über Hebel (7a,b,8a,b) gegen den Druck mindestens einer Feder (10a,b,11a,b) angelenkt sind. die sich in der Ausgangsstellung, von den Zangenhälften in spitzem Winkel schräg auf die Förderrichtung zulaufend, erstrecken.

Fig. 1

EP 0 410 094 A1

## ZANGE ZUR ENTNAHME VON BLÖCKEN AUS EINER INDUKTIONS-ERWÄRMUNGSANLAGE

Die Erfindung betrifft eine Zange zur Entnahme von Blöcken aus einer Induktions-Erwärmungsanlage mit zwei im rechten Winkel zur Förderrichtung beim tiffnen und Schließen der Zange jeweils in entgegengesetzte Richtungen zwangsgeführten Zangenhälften.

Die Schwierigkeit beim Betrieb von Induktions-Erwärmungsanlagen für die Erwärmung metallischer Blöcke besteht darin, daß die Blöcke beim Fördern durch die Induktions-Erwärmungsanlage an den Endflächen, an denen sie beim Durchlaufen der Induktions-Erwärmungsanlage nacheinander anliegen, miteinander verkleben, so daß es häufig nicht ohne weiteres möglich ist, den in Förderrichtung jeweils vordersten Block mit der Entnahmezange herkömmlicher Bauart ohne die nachfolgenden Blöcke aus der Induktions-Erwärmungsanlage zu ziehen.

Der Erfindung liegt nun die Aufgabe zugrunde, eine Vorrichtung der eingangs genannten Gattung dahingehend zu verbessern, daß der als vorderster in der Induktions-Erwärmungslage liegende Bloch, von der nachfolgenden Blöcken getrennt, aus der Induktions-Erwärmungsanlage gezogen werden kann.

Zur Lösung dieser Aufgabe wird bei der gattungsgemäßen Vorrichtung erfindungsgemäß vorgeschlagen, daß an den Zangenhälften Backen über Hebel gegen den Druck mindestens einer Feder angelenkt sind, die sich in der Ausgangsstellung, von den Zangenhälften in spitzem Winkel a schräg auf die Förderrichtung zulaufend, erstrekken.

Gemäß einer bevorzugten Ausgestaltung der erfindungsgemäßen Vorrichtung ist vorgesehene daß jede Backe über zwei Hebel an der zugehörigen Zangenhälfte parallelogrammartig angelenkt und durch die Kraft mindestens einer Druckfeder gegenüber der zangenhälfte beabstandet ist.

Die erfindungsgemäße Lösung geht davon aus, daß es bei Induktions-Erwärmungsanlagen, in denen die Blöcken mit ihren Stirnflächen aneinanderliegend, durch die Induktions-Erwärmungsanlage transportiert werden, nicht zu vermeiden ist, daß die Blöcke an den Berührungsflächen miteinander verkleben. Die Erfindung beruht auf der Überlegung, daß Mittel vorgesehen werden müssen, durch die der vorderste Block, der getrennt von den anderen aus der Induktions-Erwärmungsanlage gezogen werden soll, auf möglichst einfache und wirksame Weise beim Ergreifen mittels der Entnahmezange von dem nachfolgenden Block, an welchem er klebt, gelöst wird. Dies geschieht bei der erfindungsgemäßen Vorrichtung mittels der an den Zangenhälften federnd über Hebel schwenkbar gelagerten Backen. Diese kommen bei der Zangenbewegung mit dem Block in Berührung, während die Backen aufgrund der Wirkung der Druckfedern noch im Abstand zu den Zangenhälften stehen.

Wenn die Backen mit dem Block in Berührung sind und die Zangenhälften weiter in Richtung aufeinander zu gegen den Druck der Federn zwischen ihnen und den Backen weiterbewegt werden, dann sorgen die Anlenkhebel aufgrund ihrer Lage zwischen Zangenhälfte und Backe dafür, daß sich die Backen mit dem zwischen ihnen eingespannten Block um eine kurze Wegstrecke in Transportrichtung ruckartig bewegen, wodurch der zur Entnahme bereitliegende Block von dem nachfolgenden Block abgerissen wird.

Anhand des in der Zeichnung dargestellten Ausführungsbeispiels wird die Erfindung näher erläutert. Es zeigen:

Fig. 1 die Zange in der Ausgangsstellung und

Fig. 2 in der Eingriffsstellung mit dem Block.

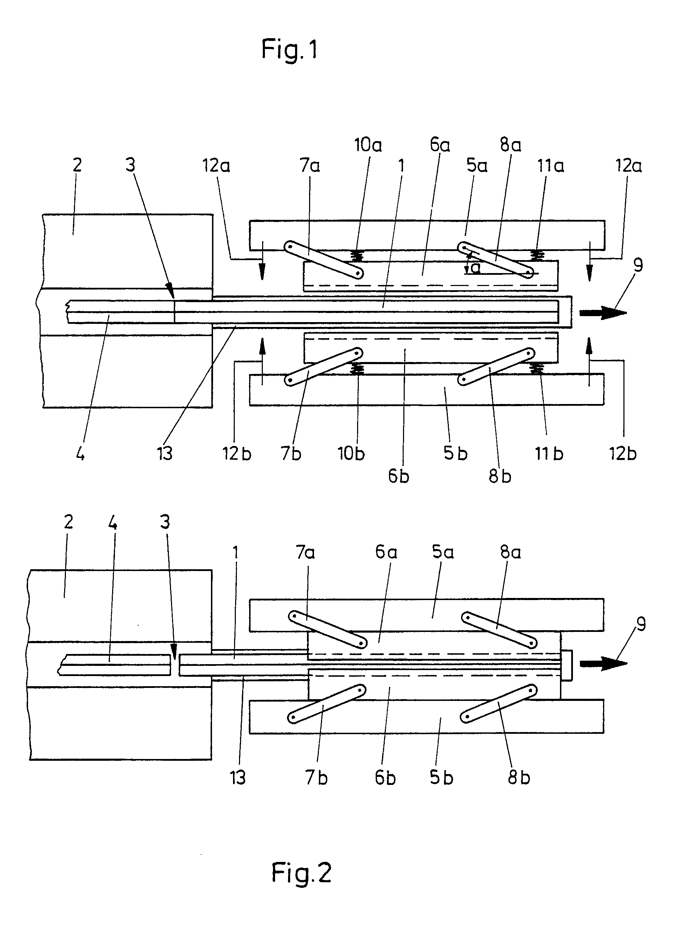

Bei der in Fig 1 dargestellten Ausgangslage liegt der vorderste Block 1 bereits fast vollständig außerhalb der Induktions-Erwärmungsanlage 2 in der Stellung zum vollständigen Herausziehen unter Ablösen der in der Induktions-Erwärmungsanlage 2 entstandenen Klebeverbindung 3 mit dem nachfolgenden Block 4. Die Entnahmezange, bestehend aus den beiden Zangenhälften 5a,5b, befindet sich in der geöffneten Ausgangsstellung zum Ergreifen und vollständigen Herausziehen des Blocks 1 aus der Induktions-Erwärmungsanlage 2.

An den Zangenhälften 5a,5b ist jeweils eine Backe 6a,6b über Hebel 7a,7b und 8a,8b angelenkt Die Hebel 7,8 stehen in der Ausgangsstellung der Fig. 1 in einem Winkel a zur Förderachse des Blocks 1 und verlaufen schräg auf die Förderrichtung 9 zu; wie Fig. 1 deutlich macht.

Durch die Wirkung von Druckfedern 10a,10b und 11a,11b werden die Backen 6 auf Abstand zu den Zangenhälften 5 gehalten.

Wenn die Zangenhälften 5 in Pfeilrichtung 12a,12b aufeinander/zubewegt werden, um den Block 1 zu ergreifen, kommen zunächst die Backen 6 mit dem spießkantig auf einer Schiene 13 liegenden Block 1 in Berührung. Da sie dann durch den Block 1 an einer Weiterbewegung gehindert sind, folgt bei weiterem Aufeinanderzubewegen der Zangenhälften 5a,5b in Pfeilrichtung 12 unter Zusammenpressen der Federn 10,11 über die Hebel 7,8 ein Vorschub der Backen 6 in Förderrichtung 9. Dadurch reißt der Block 1 an der Klebestelle 3 von dem nachfolgenden Block 4 automatisch ab und kann nach dem vollständigen Schließen der Zange (Fig. 2) in Förderrichtung 9 abtransportiert werden.

Bezugszeichenliste

1 - Block
2 - Induktions-Erwärmungsanlage
3 - Klebverbindung
4 - Block
5 - Zange
6 - Backe
7 - Hebel
8 - Hebel
9 - Förderrichtung
10 - Feder
11 - Feder
12 - Pfeilrichtung
13 - Schiene

**Ansprüche**

1. Zange zur Entnahme von Blöcken aus einer Induktions-Erwärmungsanlage mit zwei im rechten Winkel zur Förderrichtung beim tiffnen und Schließen der Zange jeweils in entgegengesetzte Richtungen zwangsgeführten Zangenhälften,
**dadurch gekennzeichnet,** daß an den Zangenhälften (5) Backen (6) über Hebel (7,8) gegen den Druck mindestens einer Feder (10,11) angelenkt sind, die sich in der Ausgangsstellung, von den Zangenhälften in spitzem Winkel (a) schräg auf die Förderrichtung (9) zulaufend, erstrecken.
2. Zange nach Anspruch 1,
**dadurch gekennzeichnet,** daß jede Backe (6) über zwei Hebel (7,8) an der zugehörigen Zangenhälfte (5) parallelogrammartig an gelenkt und durch die Kraft mindestens einer Druckfeder (10,11) gegenüber der Zangenhälfte (5) beabstandet ist.

# Fig. 1

# Fig. 2

4

Europäisches
Patentamt

**EUROPÄISCHER RECHERCHENBERICHT**

Nummer der Anmeldung

EP 90109323.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>EP - A1 - 0 311 819</u> (MEYWALD) <br> * Anspruch 1; Fig. 1 * <br> -- | 1 | B 21 C 1/32 |
| A | <u>DE - C2 - 3 134 784</u> (MAAG ZAHNRÄDER & MASCHINEN AG) <br> * Ansprüche 1-4; Fig. 3 * <br> ---- | 2 | |

RECHERCHIERTE
SACHGEBIETE (Int Cl⁵)

B 21 C  1/00
B 21 C  3/00
B 21 C  9/00
B 21 C 35/00
B 21 D 43/00
B 66 C  1/00
B 66 C 17/00
B 23 Q  7/00
B 25 B  1/00

Der vorliegende Recherchenbericht wurde für alle Patentansprüche erstellt

| Recherchenort | Abschlußdatum der Recherche | Prüfer |
|---|---|---|
| WIEN | 22-10-1990 | BISTRICH |

KATEGORIE DER GENANNTEN DOKUMENTEN
X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veroffentlicht worden ist
D : in der Anmeldung angeführtes Dokument
L : aus andern Grunden angeführtes Dokument

& : Mitglied der gleichen Patentfamilie, übereinstimmendes Dokument

EPA Form 1503 03 82